# EUROPEAN PATENT SPECIFICATION

(11) **EP 1 696 169 B1**
(45) Date of publication and mention of the grant of the patent: **21.05.2008**
(21) Application number: 05020012.0
(22) Date of filing: 14.09.2005
(51) Int. Cl.: F16M 11/10

(54) **Adjustable support frame for a display screen**
Verstellbarer Tragrahmen für Bildschirm
Structure de support réglable pour écran de visualisation

(30) Priority: 23.02.2005 CN 200510051968
(43) Date of publication of application: 30.08.2006
(73) Proprietor: Coretronic Corporation, Chu-Nan 350, Miao-Li County (TW)
(72) Inventor: Yuan, Min-Hao, Chu-Nan 350 Miao-Li County (TW)
(74) Representative: TER MEER - STEINMEISTER & PARTNER GbR

(56) References cited:
- EP-A1- 0 973 062
- US-A- 4 669 694
- US-A1- 2003 189 155
- US-A1- 2005 035 252
- US-A1- 2005 109 893
- US-A1- 2006 138 298

## Description

This application claims priority of Taiwanese Application No. 093140262, filed on December 23, 2004.

### BACKGROUND OF THE INVENTION

### 1. Field of the Invention

This invention relates to an adjustable support frame, and more particularly to an adjustable support frame for a display screen.

### 2. Description of the Related Art

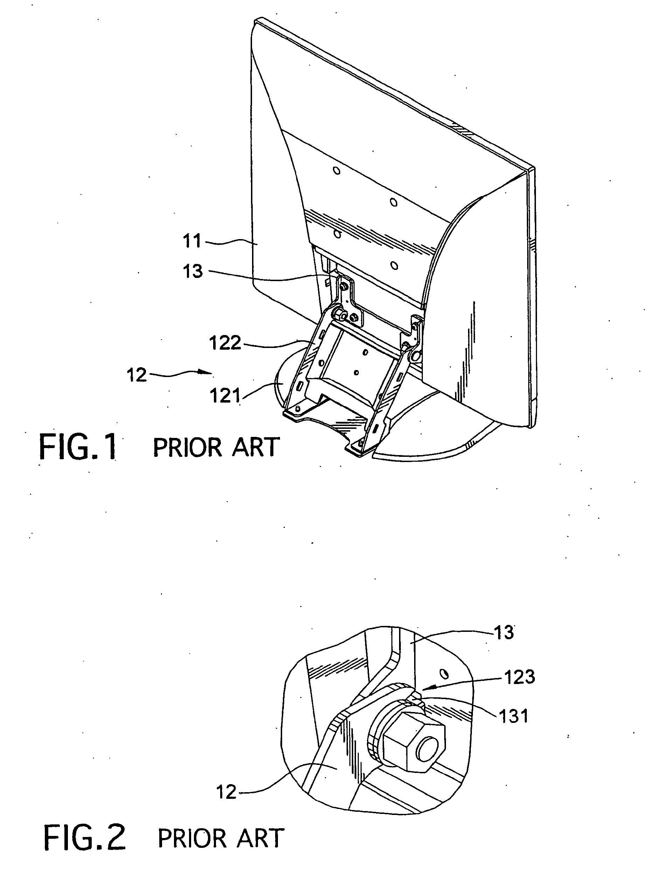

Referring to Figs. 1 and 2, a conventional support frame 12 supports a display screen 11, such as a liquid crystal display, on a working surface of a desk (not shown). The support frame 12 includes a base 121 and a supporting member 122. The supporting member 122 has a lower end connected fixedly to the base 121, and an upper end connected pivotally to a connecting member 13 that is disposed fixedly on the display screen 11. The upper end of the supporting member 122 is formed with two U-shaped connecting portions, each of which defines a gap 123. The connecting member 13 is formed with two positioning tongues 131 that extend toward each other and that are inserted respectively into the gaps 123. As such, the aforesaid conventional support frame 12 suffers from the following disadvantages:
(1) The angle of the display screen 11 can be adjusted by an amount that is determined by the size of the gaps 123.
(2) When a signal is inputted into the display screen 11 by use of a stylus or finger (assuming the display screen 11 is provided with touchsecreen capabilities), the display see 11 may rotate relative to the supporting member 12.

US 2003/0189155 A1 discloses an adjustable support frame for supporting a display screen on a supporting surface, the display screen having a screen back and a screen bottom. A support member is fixedly connected to the base, the upper end of which is slidably connected to a lower end of another support member, the upper end of which is fixedly connected to the screen back. To allow angel adjustment, the lower and upper support members are curved according to a circle, the center of which is determined by the pivot axis of the display screen.

### SUMMARY OF THE INVENTION

The object of this invention is to provide an adjustable support frame for a display screen that can overcome the aforesaid disadvantages associated with the prior art.

According to this invention, an adjustable support frame for a display screen includes a frame base, a bottom-supporting strut unit, a back-supporting strut unit and an adjusting unit. The bottom-supporting strut unit is connected fixedly to the frame base, and is connected pivotally to a screen bottom of the screen. The back-supporting strut unit includes a connecting member and a supporting member connected pivotally to both the frame base and the connecting member. The adjusting unit includes a driving member movable on the mounting plate between a locking position and a release position. In the locking position, a second engaging member engages a first engaging member so as to lock the connecting member on a screen back of the screen. In the release position, the second engaging member is removed from the first engaging member so as to release the connecting member from the screen back.

### BRIEF DESCRIPTION OF THE DRAWINGS

These and other features and advantages of this invention will become apparent in the following detailed description of the preferred embodiments of this invention, with reference to the accompanying drawings, in which:
Fig. 1 is a perspective view of a conventional support frame for a display screen;
Fig. 2 is a fragmentary perspective view of the conventional support frame, illustrating a connection between a supporting member and a connecting member;
Fig. 3 is an assembled perspective view of the first preferred embodiment of an adjustable support frame for a display screen according to this invention;
Fig. 4 is a fragmentary exploded perspective view of the first preferred embodiment;
Fig. 5 is an exploded perspective view of a connecting member and an adjusting unit of the first preferred embodiment;
Fig. 6 is a schematic rear view of the adjusting unit of the first preferred embodiment, illustrating a locking position of a driving member;
Fig. 7 is a schematic rear view of the adjusting unit of the first preferred embodiment, illustrating a release position of the driving member;
Fig. 8 is a side view of the first preferred embodiment and the display screen, illustrating how the driving member is disposed at the locking position so as to prevent angle adjustment of the display screen;
Fig. 9 is a side view of the first preferred embodiment and the display screen, illustrating how the driving member is moved to the release position so as to allow for angle adjustment of the display screen;
Fig. 10 is a fragmentary exploded perspective view of the second preferred embodiment of an adjustable support frame for a display screen according to this invention, illustrating a modified structure for connecting a supporting member pivotally to a frame base; and
Fig. 11 is a fragmentary sectional view of a base frame of the second preferred embodiment.

### DETAILED DESCRIPTION OF THE PREFERRED EMBODIMENTS

Before the present invention is described in greater detail in connection with the preferred embodiments, it should be noted that similar elements and structures are designated by like reference numerals throughout the entire disclosure.

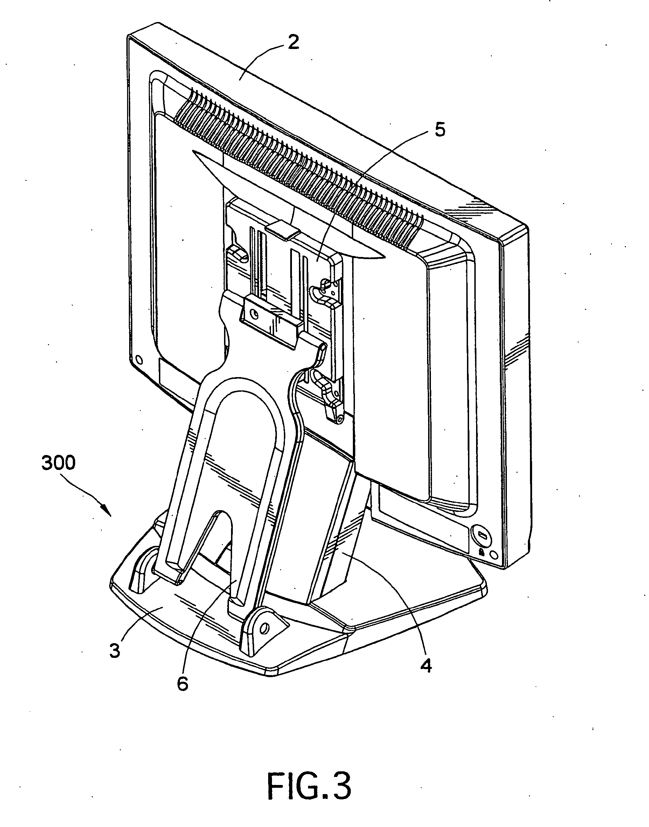

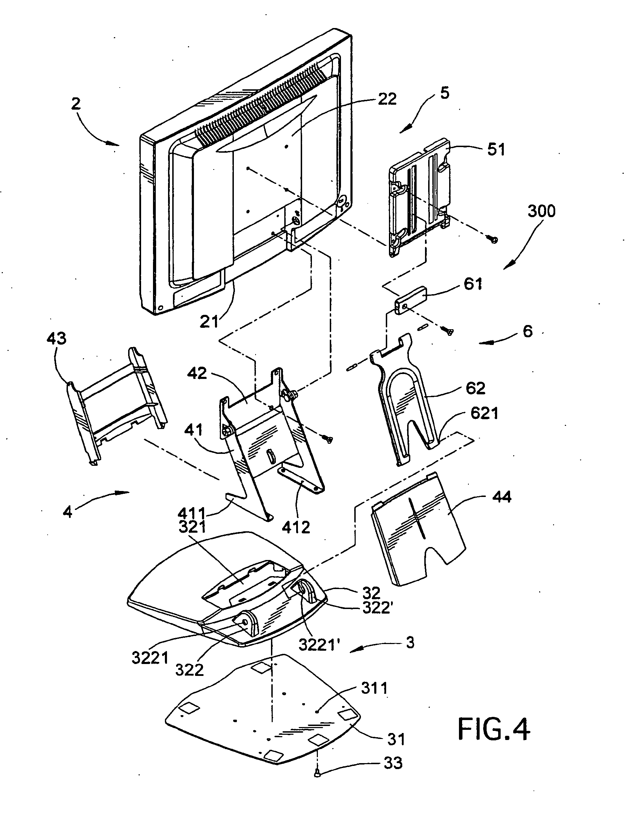

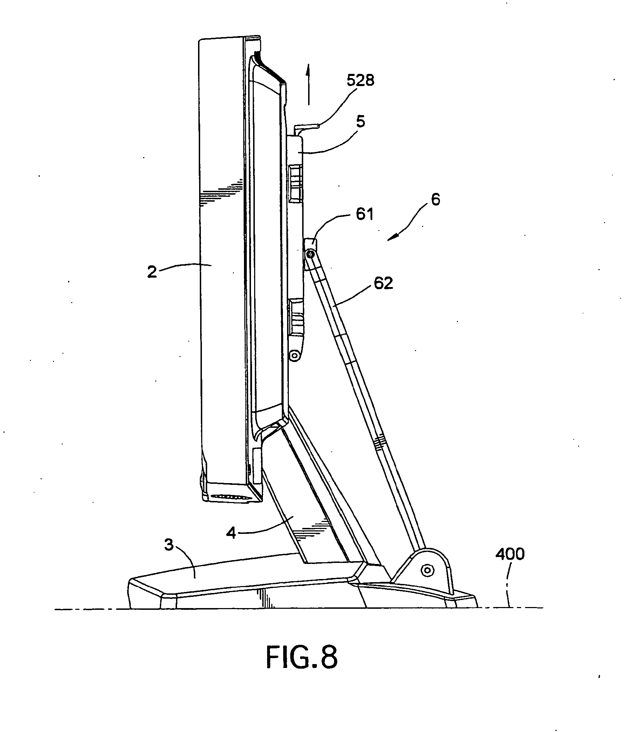

Referring to Figs. 3 and 4, the first preferred embodiment of a support frame 300 for supporting a display screen 2 on a supporting surface 400 (see Fig. 8) includes a frame base 3, a bottom-supporting strut unit 4, an adjusting unit 5 and a back-supporting strut unit 6. The display screen 2 may be a liquid crystal display, and has a screen bottom 21 and a screen back 22. The supporting surface 400 may be a working surface of a desk.

The frame base 3 is disposed on the supporting surface 400, and includes a bottom plate 31 and a top cover 32. The top cover 32 is connected removably to the bottom plate 31, and has a hole 321 formed therethrough, and a pair of aligned first and second lugs 322, 322' extending upwardly therefrom. The first lug 322 is formed with a pivot hole 3221 therethrough. The second lug 322' has a side surface that faces the first lug 322 and that is formed with an open-ended and inclined slot 3221'.

The bottom-supporting strut unit 4 includes a supporting member 41, and two outer covers 43, 44 covering respectively two opposite sides of the supporting member 41 for esthetic purposes. The supporting member 41 extends through the hole 321 in the top cover 32, and has two integral feet 411. Bolts 33 (only one is shown in Fig. 4) extend respectively through holes 311 in the bottom plate 31, and engage respectively threaded holes 412 in the feet 411. Thus, the supporting member 41 is connected fixedly to the frame base 3 at a lower end thereof. The connecting member 42 is connected fixedly to the screen bottom 21, and is connected pivotally to an upper end of the supporting member 41. Therefore, the display screen 2 can rotate relative to the supporting member 41.

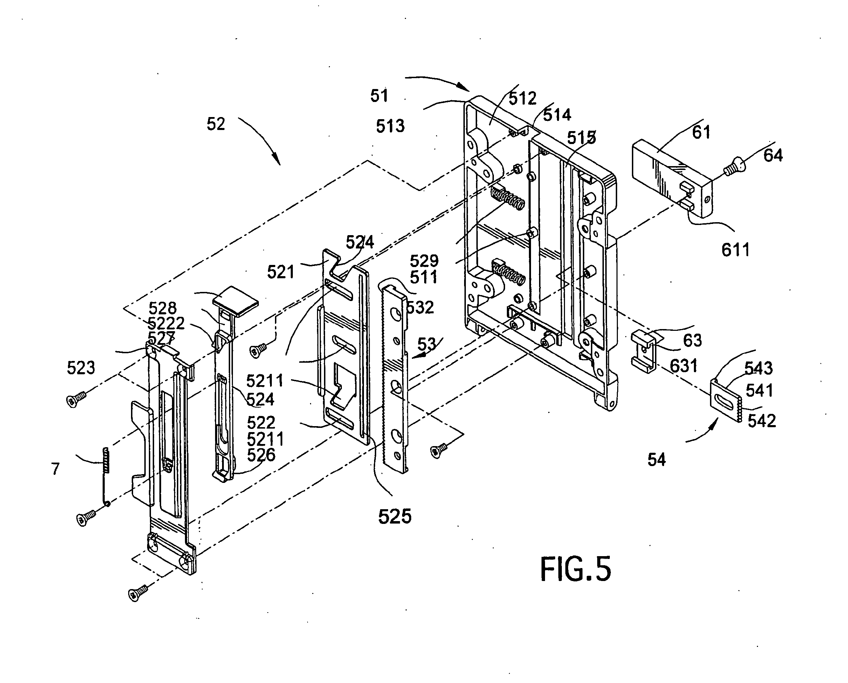

The back-supporting strut unit 6 includes a connecting member 61, a supporting member 62 connected pivotally to the connecting member 61 at an upper end thereof, and a stop member 63 (see Fig. 5). The supporting member 62 is formed with two integral pivot pins 621 that engage respectively the pivot hole 3221 in the first lug 322 and the slot 3221' in the second lug 322'. Thus, the supporting member 62 is connected pivotally to the frame base 3 at a lower end thereof.

Referring to Figs. 4, 5 and 6, the adjusting unit 5 includes a housing 51, a controlling device 52, a first engaging member 53 and a second engaging member 54. The housing 51 is attached fixedly to the screen back 22, and includes a mounting plate 512 and a surrounding wall 513. The surrounding wall 513 is formed along a periphery of a front side surface of the mounting plate 512, and has a notch 514. The mounting plate 512 is formed with a slide slot 515. The connecting member 61 has a front side surface that abuts against a rear side surface of the mounting plate 512 and that is formed with a fixed guiding projection unit. The guiding projection unit includes two parallel ribs 611 that are spaced apart from each other and that extend through the slide slot 515 in the mounting plate 512. The stop member 63 abuts against the front side surface of the mounting plate 512, and is connected fixedly to the connecting member 61 by a bolt 64. This prevents removal of the connecting member 61 from the mounting plate 512, and allows for movement of the connecting member 61 on the mounting plate 512. As such, the connecting member 61 is movable along the slide slot 515 so as to adjust the angle of the display screen 2.

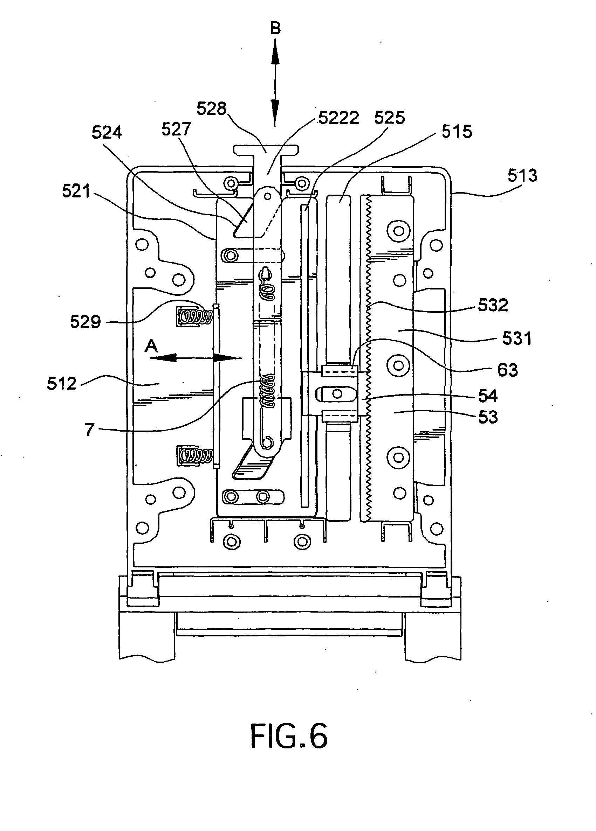

The controlling device 52 includes a sliding plate 521, a driving member 522 and a cover plate 523 that is connected fixedly to the mounting plate 512 so as to conceal a lower portion of the driving member 522 between the mounting plate 512 and the cover plate 523. The sliding plate 521 is formed with three parallel guide slots 5211 extending along a first direction (A) (see Fig. 6). The mounting plate 512 is formed with three guide stubs 511 that are received respectively within the parallel guide slots 5211 in the sliding plate 521. Thus, the sliding plate 521 is guided to move on the mounting plate 512 along the first direction (A). The sliding plate 521 further has two inclined guide slots 524 and a retaining slot 525 that extends along a second direction (B) (see Fig. 6), which is perpendicular to the first direction (A) . The inclined guide slots 524 extend along a direction inclined relative to the first and second directions (A, B), and are aligned with each other along the second direction (B). The driving member 522 has a body 526 and two inclined guiding arms 527 that project forwardly from the body 526 and that are parallel to the inclined guide slots 524. The guiding arms 527 are movable respectively within the inclined guide slots 524. The driving member 522 further has a neck portion 5222 and an end plate 528 that are formed integrally with each other. The neck portion 5222 extends through the notch 514 so as to guide the driving member 522 to move on the mounting plate 512 along the second direction (B). The end plate 528 is perpendicular to the mounting plate 512, and is disposed outwardly of the mounting plate 512 to allow for operation by a user. A spring unit includes two coiled compression springs 529 for biasing the sliding plate 521 to move toward the stop member 63 in the first direction (A). As such, when the end plate 528 is operated to move the driving member 522 on the mounting plate 512 along the second direction (B), the sliding plate 521 moves on the mounting plate 512 along the first direction (A).

The first engaging member 53 is disposed fixedly on the mounting plate 512, and is formed with a serrated edge 532. The second engaging member 54 is disposed between the sliding plate 521 and the first engaging member 53, and has an annular plate body 541. The bolt 64 extends through the stop member 63 and the plate body 541 so as to prevent removal of the second engaging member 54 from the stop member 63. The plate body 541 is received slidably within a dovetail groove 631 in the stop member 63, and is formed with a serrated edge 542 at one end thereof, and an insert arm 543 extending perpendicularly from the plate body 541 at the other end thereof. The insert arm 543 is inserted into the retaining slot 525 in the sliding plate 521 so as to allow for synchronous movement of the second engaging member 54 and the sliding plate 521. As a result, the serrated edge 542 of the second engaging member 54 is biased by the compression springs 529 to engage the serrated edge 532 of the first engaging member 53.

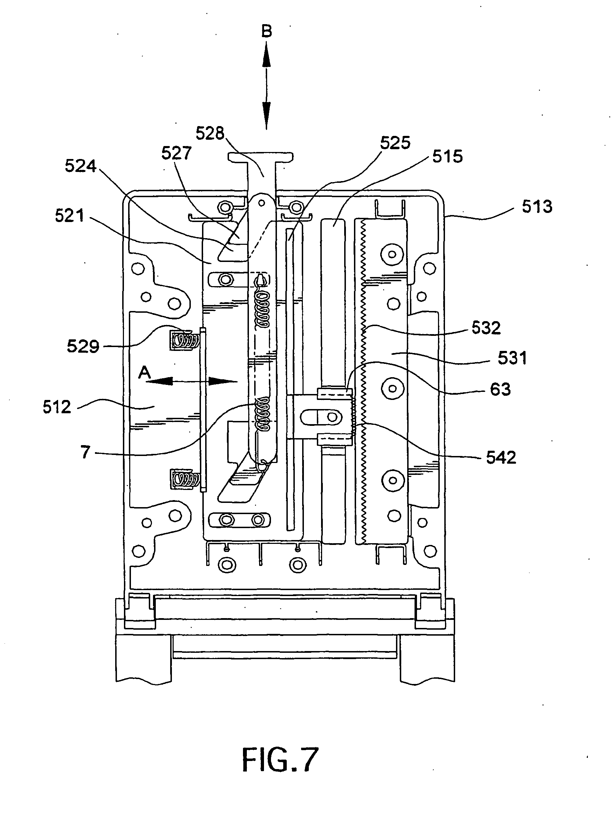

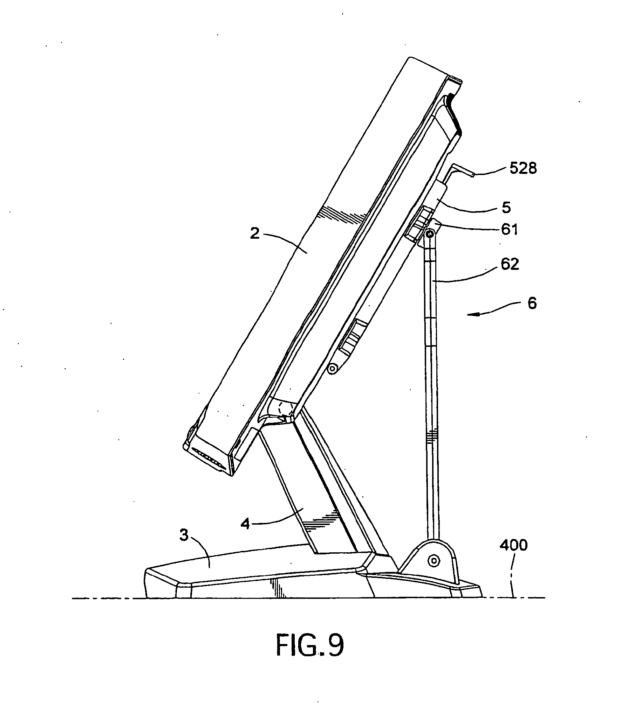

The driving member 522 is movable on the mounting plate 512 between a locking position shown in Figs. 6 and 8 and a release position shown in Figs. 7 and 9. In the locking position, the second engaging member 54 engages the first engaging member 53 so as to lock the connecting member 61 on the mounting plate 512. This prevents angle adjustment of the display screen 2. In the release position, the second engaging member 54 is removed from the first engaging member 53 so as to release the connecting member 61 from the mounting plate 512. This allows for angle adjustment of the display screen 2. A biasing unit 7 is configured as a coiled tension spring, and connects the driving member 522 to the mounting plate 512 so as to bias the driving member 522 to the locking position.

In operation, when the driving member 522 is pulled upwardly to the release position, the angle of the display screen 2 can be adjusted. After adjustment, the driving member 522 is released, and therefore is biased to the locking position.

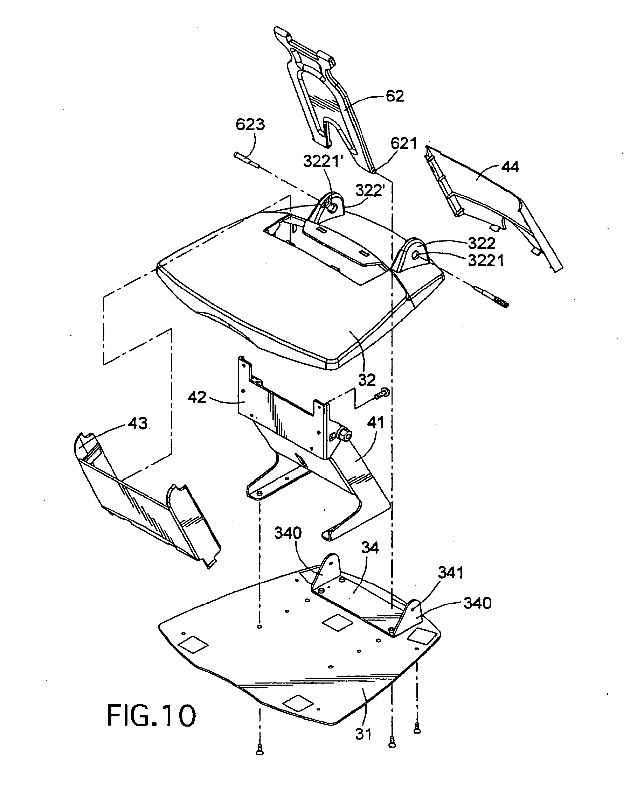

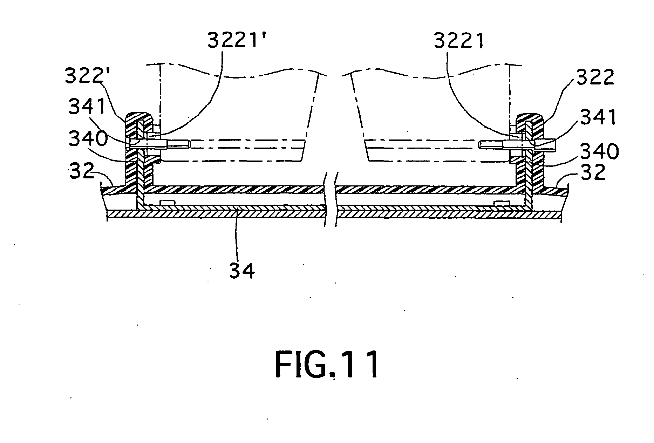

Figs. 10 and 11 show a modified structure for connecting the supporting member 62 pivotally to the frame base 3. In contrast to the previous embodiment, the first and second lugs 322, 322' are hollow, and the supporting member 62 includes a U-shaped bracket 34 fixed on the bottom plate 31. The U-shaped bracket 34 has two upright plate portions 340 that are inserted respectively into the first and second lugs 322, 322'. Each of the plate portions 340 has a threaded hole 341 that is formed therethrough and that is aligned with the pivot hole 3221 in the first lug 322 and the slot 3221' in the second lug 322'. In this embodiment, the supporting member 62 further includes two pivot bolts 623. Each of the pivot bolts 623 extends into a corresponding one of the pivot hole 3221 in the first lug 322 and the slot 3221' in the second lug 322', engages the corresponding threaded hole 341 in the U-shaped bracket 34, and is inserted into the corresponding pivot pin 621 of the supporting member 62.

The adjustable support frame 300 of this invention has the following advantages:
(1) The angle of the display screen 2 can be adjusted easily within a large range.
(2) The first and second engaging members 53, 54 engage each other along a line, rather than at one or two points. This prevents rotation of the display screen 2 relative to the support frame 300 when a signal is inputted into the display screen 2 by use of a stylus or finger (assuming the display screen 2 is provided with touchscreen capabilities).
(3) The bottom-supporting strut unit 4 cooperates with the back-supporting strut unit 6 so as to support the display screen 2 stably on the supporting surface 400.

## Claims

1. An adjustable support frame (300) for supporting a display screen (2) on a supporting surface (400), the display screen (2) having a screen back (22) and a screen bottom (21), said support frame (300) comprising:
- a frame base (3) adapted to be disposed on the supporting surface (400);
- a bottom-supporting strut unit (4) having a lower end connected fixedly to said frame base (3), and an upper end adapted to be connected pivotally to the screen bottom (21);
**characterized by:**
- a back-supporting strut unit (6) including a connecting member (61) and a supporting member (62) that has a lower end connected pivotally to said base (3), and an upper end connected pivotally to said connecting member (61); and
- an adjusting unit (5) including
-- a mounting plate (512) adapted to be attached fixedly to the screen back (22) and having a slide slot (515), said connecting member (61) being movable along said slide slot (515) so as to adjust an angle of the display screen (2),
-- a first engaging member (53) disposed fixedly on said mounting plate (512).
-- a second engaging member (54) disposed movably on said mounting plate (512),
-- a driving member (522) disposed movably on said mounting plate (512) and movable on said mounting plate (512) between a locking position, where said second engaging member (54) engages said first engaging member (53) so as to lock said connecting member (61) on said mounting plate (512) and where angle adjustment of the display screen is prevented, and a release position, where said second engaging member (54) is removed from said first engaging member (53) so as to release said connecting member (61) from said mounting plate (512) and where angle adjustment of the display screen (2) is allowed, and
-- a biasing unit (7) for biasing said driving member (522) to said locking position.

2. The adjustable support frame (300) as claimed in claim 1, wherein said mounting plate (512) has opposite front and rear side surfaces, said connecting member (61) having a front side surface that abuts against said rear side surface of said mounting plate (512) and that is formed with a fixed guiding projection unit which extends through said slide slot in said mounting plate (512), said back-supporting strut unit (6) further including a stop member (63) that abuts against said front side surface of said mounting plate (512) and that is connected fixedly to said guiding projection unit so as to prevent removal of said connecting member (61) from said mounting plate (512) while permitting movement of said connecting member (61) on said mounting plate (512).

3. The adjustable support frame (300) as claimed in claim 2, wherein said guiding projection unit includes two parallel ribs (611) that are fixed on said front side surface of said connecting member (61) and that are spaced apart from each other, said stop member (63) being connected threadedly to said connecting member (61).

4. The adjustable support frame (300) as claimed in claim 2, wherein said stop member (63) is formed with a dovetail groove (631), said second engaging member (54) being received slidably within said dovetail groove (631).

5. The adjustable support frame (300) as claimed in claim 4, wherein each of said first and second engaging member (53, 54) has a serrated edge (532. 542), said serrated edges (532, 542) of said first and second engaging members (53, 54) engaging each other when said driving member (522) is disposed at said locking position.

6. The adjustable support frame (300) as claimed in claim 1, wherein said second engaging member (54) is movable on said mounting plate (512) along a first direction, and said driving member (522) is movable on said mounting plate along a second direction perpendicular to said first direction.

7. The adjustable support frame (300) as claimed in claim 6, wherein said driving member (522) is formed with two guiding arms (527) that project forwardly therefrom and that are aligned with each other along said second direction, said guiding arms (527) extending in a direction inclined relative to said first and second directions,
said adjusting unit (5) further including:
- a sliding plate (521) movable on said mounting plate (512) along said first direction and having two guide slots (524) that extend parallel to said guiding arms (527), said guiding arms (527) being movable respectively within said guide slots (524) so as to move said sliding plate (521) on said mounting plate (512) along said first direction when said driving member (522) moves on said mounting plate (512) along said second direction, said second engaging member (54) being connected to said sliding plate (521) so as to allow for synchronous movement therewith; and
- a spring unit for biasing said second engaging member (54) to engage said first engaging member (53).

8. The adjustable support frame as claimed in claim 7, wherein said mounting plate (512) has opposite front and rear side surfaces, said front side surface of said mounting plate being formed with a surrounding wall (513) along a periphery thereof, said surrounding wall (513) having a notch (514), said driving member (522) having a neck portion (5222) extending through said notch (514) so as to guide said driving member (522) to move on said mounting plate (512) along said second direction, and an end plate (528) connected fixedly to said neck portion (5222) and perpendicular to said mounting plate (512), said end plate (528) being disposed outwardly of said mounting plate (512) for manual operation.

9. The adjustable support frame (300) as claimed in claim 8, wherein said sliding plate (521) is formed with a retaining slot (525) that extends along said second direction, said second engaging member (54) being disposed between said sliding plate (521) and said first engaging member (53) and having an end that is formed with an insert arm (543) that extends perpendicularly therefrom and that is inserted into said retaining slot (525) in said sliding plate (521) so as to allow for synchronous movement of said second engaging member (54) and said sliding plate (521).

10. The adjustable support frame (300) as claimed in claim 7, wherein said spring unit includes at least one compression spring (529) for biasing said sliding plate (521) toward said first engaging member (53).

11. The adjustable support frame (300) as claimed in claim 1, wherein said biasing unit (7) includes a tension spring that interconnects said mounting plate (512) and said driving member (522).

## Patentansprüche

1. Verstellbarer Tragrahmen (300) zum Tragen eines Anzeigeschirms (2) auf einer Tragfläche (400), wobei der Anzeigeschirm (2) eine Schirmrückseite (22) und einen Schirmboden (21) aufweist, und wobei der Tragrahmen (300) folgendes umfasst:
- eine zur Anordnung auf der Tragfläche (400) geeignete Rahmenbasis (3) ;
- eine Boden-stützende Stützbalkeneinheit (4) mit einem fest mit der Rahmenbasis (3) verbundenen unteren Ende und einem oberen Ende, das geeignet zur schwenkbaren Verbindung mit dem Schirmboden (21) ist; **gekennzeichnet durch**:
- eine Rückseite-stützende Stützbalkeneinheit (6) mit einem Verbindungselement (61) und einem Stützelement (62), welches ein mit der Basis (3) schwenkbar verbundenes untere Ende und ein oberes Ende aufweist, das schwenkbar mit dem Verbindungselement (61) verbunden ist; und
- eine Verstelleinheit (5) mit
-- einer Befestigungsplatte (512), die zur festen Anbringung an die Schirmrückseite (22) geeignet ist und einen Gleitschlitz (515) aufweist, wobei das Verbindungselement (61) entlang des Gleitschlitzes (515) bewegbar ist, um einen Winkel des Anzeigeschirms (2) einzustellen,
-- einem fest an der Befestigungsplatte (512) angeordneten ersten Eingriffselement (53),
-- einem beweglich an der Befestigungsplatte (512) angeordneten zweiten Eingriffselement (54),
-- einem Betätigungselement (522), das beweglich an der Befestigungsplatte (512) angeordnet ist und an der Befestigungsplatte (512) zwischen einer Verriegelungsposition, wo das zweite Eingriffselement (54) mit dem ersten Eingriffselement (53) in Eingriff steht, um das Verbindungselement (61) an der Befestigungsplatte (512) zu verriegeln und wo eine Winkelverstellung des Anzeigeschirms verhindert wird, und einer Entriegelungsposition bewegbar ist, wo das zweite Eingriffselement (54) vom ersten Eingriffselement (53) entfernt wird, um das Verbindungselement (61) von der Befestigungsplatte (512) zu entriegeln und wo eine Winkelverstellung des Anzeigeschirms (2) möglich ist, und
-- einer Vorspanneinheit (7) zum Vorspannen des Betätigungselements (522) in die Verriegelungsposition.

2. Verstellbarer Tragrahmen (300) nach Anspruch 1, wobei die Befestigungsplatte (512) entgegengesetzte Vorder- und Rückseitenflächen aufweist, und wobei das Verbindungselement (61) eine Vorderseitenfläche aufweist, die gegen die Rückseitenfläche der Befestigungsplatte (512) stößt und die mit einer festen Führungsvorsprungseinheit ausgebildet ist, welche sich durch den Gleitschlitz in der Befestigungsplatte (512) erstreckt, wobei die Rückseite-stützendende Stützbalkeneinheit (6) ferner ein Stoppelement (63) umfasst, welches gegen die Vorderseitenfläche der Befestigungsplatte (512) stößt und die fest mit der Führungsvorsprungseinheit verbunden ist, um eine Entfernung des Verbindungselements (61) von der Befestigungsplatte (512) zu verhindern, während es eine Bewegung des Verbindungselements (61) an der Befestigungsplatte (512) ermöglicht.

3. Verstellbarer Tragrahmen (300) nach Anspruch 2, wobei die Führungsvorsprungseinheit zwei parallele Rippen (611) umfasst, die an der Vorderseitenfläche des Verbindungslelements (61) befestigt sind und die voneinander beabstandet sind, wobei das Stoppelement (63) über eine Schraubverbindung mit dem Verbindungselement (61) verbunden ist.

4. Verstellbarer Tragrahmen (300) nach Anspruch 2, wobei das Stoppelement (63) mit einer schwalbenschwanzartigen Nut (631) ausgebildet ist, und wobei das zweite Eingriffselement (54) gleitend innerhalb der schwalbenschwanzartigen Nut (631) aufgenommen ist.

5. Verstellbarer Tragrahmen (300) nach Anspruch 4, wobei sowohl das erste als auch das zweite Eingriffselement (53, 54) eine gezahnte Kante (532, 542) aufweist, und wobei die gezahnten Kanten (532, 542) des ersten und zweiten Eingriffselements (53, 54) miteinander in Eingriff stehen, wenn das Betätigungselement (522) in seiner Verriegelungsposition angeordnet ist.

6. Verstellbarer Tragrahmen (300) nach Anspruch 1, wobei das zweite Eingriffselement (54) entlang einer ersten Richtung an der Befestigungsplatte (512) bewegbar ist, und wobei das Betätigungselement (522) entlang einer zu der ersten Richtung senkrechten zweiten Richtung an der Befestigungsplatte bewegbar ist.

7. Verstellbarer Tragrahmen (300) nach Anspruch 6, wobei das Betätigungselement (522) mit zwei Führungsarmen (527) ausgebildet ist, die von diesem nach vorne ragen und die miteinander entlang der zweiten Richtung ausgerichtet sind, wobei die Führungsarme (527) sich in eine Richtung erstrecken, die relativ zu der ersten und zweiten Richtung geneigt ist, wobei die Verstelleinheit (5) ferner folgendes umfasst:
- eine Gleitplatte (521), die entlang der ersten Richtung an der Befestigungsplatte (512) bewegbar ist und zwei Führungsschlitze (524) aufweist, die sich parallel zu den Führungsarmen (527) erstrecken, wobei die Führungsarme (527) entsprechend innerhalb der Führungsschlitze (524) bewegbar sind, um die Gleitplatte (521) an der Befestigungsplatte (512) entlang der ersten Richtung zu bewegen, wenn sich das Betätigungselement (522) entlang der zweiten Richtung an der Befestigungsplatte (512) bewegt, wobei das zweite Eingriffselement (54) mit der Gleitplatte (521) verbunden ist, um eine synchrone Bewegung damit zu ermöglichen; und
- eine Federeinheit zum Vorspannen des zweiten Eingriffselements (54) in einen Eingriff mit dem ersten Eingriffselement (53).

8. Verstellbarer Tragrahmen (300) nach Anspruch 7, wobei die Befestigungsplatte (512) entgegengesetzte Vorder- und Rückseitenflächen aufweist, die Vorderseitenfläche der Befestigungsplatte mit einer Umfangswand (513) entlang ihres Umfangs ausgebildet ist, die Umfangswand (513) eine Kerbe (514) aufweist, und wobei das Betätigungselement (522) einen Halsabschnitt (5222), der sich durch die Kerbe (514) erstreckt, um das Betätigungselement (522) in einer Bewegung an der Befestigungsplatte (512) entlang der zweiten Richtung zu führen, und eine Endplatte (528) aufweist, die fest mit dem Halsabschnitt (5222) und senkrecht zu der Befestigungsplatte (512) verbunden ist, wobei die Endplatte (528) außerhalb der Befestigungsplatte (512) für eine manuelle Betätigung angeordnet ist.

9. Verstellbarer Tragrahmen (300) nach Anspruch 8, wobei die Gleitplatte (521) mit einem Halteschlitz (525) gebildet ist, der sich entlang der zweiten Richtung erstreckt, wobei das zweite Eingriffselement (54) zwischen der Gleitplatte (521) und dem ersten Eingriffselement (53) angeordnet ist und ein Ende aufweist, das mit einem Einsetzarm (543) gebildet ist, welcher sich senkrecht davon wegerstreckt und der in den Halteschlitz (525) in der Gleitplatte (521) eingesetzt ist, um eine synchrone Bewegung des zweiten Eingriffselements (54) und der Gleitplatte (521) zu ermöglichen.

10. Verstellbarer Tragrahmen (300) nach Anspruch 7, wobei die Feder zumindest eine Druckfeder (529) zum Vorspannen der Gleitplatte (521) gegen das erste Eingriffselement (53) umfasst.

11. Verstellbarer Tragrahmen (300) nach Anspruch 1, wobei die Vorspanneinheit (7) eine Zugfeder umfasst, die die Befestigungsplatte (512) und das Betätigungselement (522) miteinander verbindet.

## Revendications

1. Châssis de support ajustable (300) pour supporter un écran d'affichage (2) sur une surface de support (400), l'écran d'affichage (2) possédant un dos d'écran (22) et un bas d'écran (21), ledit châssis de support (300) comprenant :
- une base de châssis (3) adaptée à être disposée sur la surface de support (400) ;
- une unité entretoise (4) de support de bas ayant une extrémité inférieure connectée de manière fixe à ladite base de châssis (3) et une extrémité supérieure adaptée à être connecté en pivotement au bas (21) de l'écran ;
**caractérisé par** :
- une unité entretoise (6) de support de dos incluant un élément de connexion (61) et un élément de support (62) qui possède une extrémité inférieure connectée en pivotement à ladite base (3) et une extrémité supérieure connectée en pivotement audit élément de connexion (61) ; et
- une unité d'ajustement (5) qui inclut
-- une plaque de montage (512) adaptée à être attachée de manière fixe au dos (22) de l'écran et ayant une fente de coulissement (515), ledit élément de connexion (61) étant mobile le long de ladite fente de coulissement (515) de manière à ajuster un angle de l'écran d'affichage (2),
-- un premier élément d'engagement (53) disposé de manière fixe sur ladite plaque de montage (512),
-- un second élément d'engagement (54) disposé de manière mobile sur ladite plaque de montage (512),
-- un élément d'entraînement (522) disposé de manière mobile sur ladite plaque de montage (512) et mobile sur ladite plaque de montage (512) entre une position de blocage, dans laquelle ledit second élément d'engagement (54) engage ledit premier élément d'engagement (53) de manière à bloquer le ledit élément de connexion (61) sur ladite plaque de montage (512) et dans laquelle un ajustement angulaire de l'écran d'affichage est empêché, et une position de relâchement, dans laquelle ledit second élément d'engagement (54) est enlevé par rapport audit premier élément d'engagement (53) de manière à relâcher ledit élément de connexion (51) depuis ladite plaque de montage (512) et dans laquelle un ajustement angulaire de l'écran d'affichage (2) est permis, et
-- une unité de sollicitation (7) pour solliciter le ledit élément d'entraînement (522) vers ladite position de blocage.

2. Châssis de support ajustable (300) selon la revendication 1, dans lequel ladite plaque de montage (512) présente des surfaces opposées du côté avant et du côté arrière, ledit élément de connexion (61) ayant une surface du côté avant qui vient en butée contre ladite surface du côté arrière de ladite plaque de montage (512) et qui est formée avec une unité à projection de guidage fixe qui s'étend à travers ladite fente de coulissement dans ladite plaque de montage (512), ladite unité entretoise (6) de support de dos incluant encore un élément d'arrêt (63) qui vient buter contre ladite surface du côté avant de ladite plaque de montage (512) et qui est connecté de manière fixe à ladite unité à projection de guidage de manière à empêcher l'enlèvement dudit élément de connexion (61) depuis ladite plaque de montage (512) tout en permettant un mouvement dudit élément de connexion (61) sur ladite plaque de montage (512).

3. Châssis de support ajustable (300) selon la revendication 2, dans lequel ladite unité à projection de guidage inclut deux nervures parallèles (611) qui sont fixées sur ladite surface du côté avant dudit élément de connexion (61) et qui sont espacées l'une de l'autre, ledit élément d'arrêt (63) étant connecté par vissage sur ledit élément de connexion (61).

4. Châssis de support ajustable (300) selon la revendication 2, dans lequel ledit élément d'arrêt (63) est formé avec une gorge en queue d'aronde (631), ledit second élément d'engagement (54) étant reçu en coulissement dans ladite gorge en queue d'aronde (631).

5. Châssis de support ajustable (300) selon la revendication 4, dans lequel chacun dudit premier et dudit second élément d'engagement (53, 54) présente une bordure crénelée (532, 542), lesdites bordures crénelées (532, 542) dudit premier et dudit second élément d'engagement (53, 54) s'engageant mutuellement quand ledit élément d'entraînement (522) est disposé à ladite position de blocage.

6. Châssis de support ajustable (300) selon la revendication 1, dans lequel ledit second élément d'engagement (54) est mobile sur ladite plaque de montage (512) le long d'une première direction, et ledit élément d'entraînement (522) est mobile sur ladite plaque de montage le long d'une seconde direction perpendiculaire à ladite première direction.

7. Châssis de support ajustable (300) selon la revendication 6, dans lequel ledit élément d'entraînement (522) est formé avec deux bras de guidage (527) qui se projettent vers l'avant depuis celui-ci et qui sont alignés l'un avec l'autre le long de ladite seconde direction, lesdits bras de guidage (527) s'étendant dans une direction inclinée par rapport à ladite première et ladite seconde direction,
ladite unité d'ajustement (5) incluant en outre :
- une plaque coulissante (521) mobile sur ladite plaque de montage (512) le long de ladite première direction et ayant deux fentes de guidage (524) qui s'étendent parallèlement auxdits bras de guidage (527), lesdits bras de guidage (527) étant mobiles respectivement à l'intérieur desdites fentes de guidage (524) de manière à déplacer ladite plaque coulissante (521) sur ladite plaque de montage (512) le long de ladite première direction quand ledit élément d'entraînement (522) se déplace sur ladite plaque de montage (512) le long de ladite seconde direction, ledit second élément d'engagement (54) étant connecté à ladite plaque coulissante (521) de manière à permettre un mouvement synchrone avec celle-ci ; et
- une unité à ressort pour solliciter le ledit second élément d'engagement (54) en engagement avec le ledit premier élément d'engagement (53).

8. Châssis de support ajustable selon la revendication 7, dans lequel ladite plaque de montage (512) présente des surfaces opposées du côté avant et du côté arrière, ladite surface du côté avant de la plaque de montage étant formée avec une paroi (513) qui l'entoure le long de sa périphérie, ladite paroi d'entourage (513) ayant une encoche (514), ledit élément d'entraînement (522) ayant une portion rétrécie (5222) s'étendant à travers ladite encoche (514) de manière à guider le ledit élément d'entraînement (522) pour se déplacer sur ladite plaque de montage (512) le long de ladite seconde direction, et une plaque terminale (528) connectée de manière fixe sur ladite portion rétrécie (5222) et perpendiculairement à ladite plaque de montage (512), ladite plaque terminale (528) étant disposée vers l'extérieur de ladite plaque de montage (512) pour un fonctionnement manuel.

9. Châssis de support ajustable (300) selon la revendication 8, dans lequel ladite plaque coulissante (521) est formée avec une fente de retenue (525) qui s'étend le long de ladite seconde direction, ledit second élément d'engagement (54) étant disposé entre ladite plaque coulissante (521) et ledit premier élément d'engagement (53) et ayant une extrémité formée avec un bras-insert (543) qui s'étend perpendiculairement de celle-ci et qui est inséré dans ladite fente de retenue (525) dans ladite plaque coulissante (521) de manière à permettre un mouvement synchrone dudit second élément d'engagement (54) et de ladite plaque coulissante (521).

10. Châssis de support ajustable (300) selon la revendication 7, dans lequel ladite unité à ressort inclut au moins un ressort de compression (529) pour solliciter ladite plaque coulissante (521) vers le ledit premier élément d'engagement (53).

11. Châssis de support ajustable (300) selon la revendication 1, dans lequel ladite unité de sollicitation (7) inclut un ressort de traction qui relie ladite plaque de montage (512) et ledit élément d'entraînement (522).
